# EUROPÄISCHE PATENTANMELDUNG

(11) **EP 2 233 772 A2**
(43) Veröffentlichungstag der Anmeldung: **29.09.2010**
(21) Anmeldenummer: 10151649.0
(22) Anmeldetag: 26.01.2010
(51) Int. Cl.: F16F 9/34

(54) **Schieber für einen Fahrzeugdämpfer und zugehöriger Fahrzeugdämpfer**

(30) Priorität: 24.03.2009 DE 102009001777
(71) Anmelder: Robert Bosch GmbH, 70442 Stuttgart (DE)
(72) Erfinder: Kratzer, Dietmar, 71732 Tamm (DE)

(57) **Zusammenfassung**

Die Erfindung betrifft einen Schieber (28) für einen Fahrzeugdämpfer mit einem Boden (28a), wobei mit dem Schieber (28) zur Einstellung von Dämpferkennwerten ein Durchfluss eines Dämpferfluids durch mindestens einen Durchflusskanal (20a, 20b) regelbar ist. Erfindungsgemäß ist der Schieber als Stanzbiegeteil (28) ausgeführt.

## Beschreibung

### Stand der Technik

Die Erfindung geht aus von einem Schieber für einen Fahrzeugdämpfer nach der Gattung des unabhängigen Patentanspruchs 1 und einen korrespondierenden Dämpfer für ein Fahrzeug, der mindestens einen solchen Schieber umfasst.

In der Offenlegungsschrift DE 10 2007 025 966 A1 wird ein Dämpfer für ein Fahrzeug beschrieben. Der beschriebene Dämpfer umfasst einen mit einem Dämpferfluid befüllten Dämpferzylinder, in welchem ein Kolbenstempel über eine Kolbenstange geführt ist. Bei einer axialen Bewegung der Kolbenstange und damit des Kolbenstempels gegenüber dem Dämpferzylinder muss das Dämpferfluid durch eine innerhalb des Dämpferzylinders angeordnete Durchflusseinrichtung fließen. Durch den Widerstand, welcher dem Dämpferfluid hierbei entgegengebracht wird, werden Druckdifferenzen erzeugt, die über Wirkflächen Dämpfungskräfte erzeugen. Damit der Dämpfer in zwei Richtungen Dämpfungsarbeit ausüben kann und somit sowohl beim so genannten Ausfedern als auch beim so genannten Einfedern dämpft, weist die Durchflusseinrichtung eine in eine erste Durchflussrichtung wirkende Druckstufe und eine in eine zweite Durchflussrichtung wirkende Zugstufe auf. Zur Regelung des Dämpferfluidstroms in der Durchflusseinrichtung ist eine Verstelleinrichtung mit Verstellmitteln vorgesehen, welche eine Federpaketeinheit, einen über der Federpaketeinheit angeordneten, verschiebbaren Schieber und eine Getriebeeinheit umfassen. Üblicherweise wird der Dämpfer bei seiner Herstellung einmalig mit Dämpferfluid befüllt, welches über die gesamte Lebensdauer des Dämpfers in der einen geschlossenen Kreislauf bildenden Durchflusseinrichtung umläuft.

### Offenbarung der Erfindung

Der erfindungsgemäße Dämpfer mit den Merkmalen des unabhängigen Patentanspruchs 1 hat demgegenüber den Vorteil, dass der Schieber als Stanzbiegeteil ausgeführt ist. Vorzugsweise ist der Schieber als mehrfach abgewinkelter Blechabschnitt gebildet. In besonders vorteilhafter Weise ergibt sich hierdurch eine besonders einfache und kostengünstige Herstellung des Schiebers. Insbesondere ist hiermit eine großserientaugliche Herstellung des Schiebers möglich. Bevorzugt weist das Stanzbiegeteil einen flächigen Bodenabschnitt und zwei sich jeweils an den Bodenabschnitt anschließende abgewinkelte Seitenabschnitte auf.

Ein erfindungsgemäßer Dämpfer für ein Fahrzeug umfasst zur Regelung einer Dämpferfluidströmung in mindestens einem Durchflusskanal mindestens einen erfindungsgemäßen Schieber, um Dämpferkennwerte des Fahrzeugdämpfers einzustellen.

Durch die in den abhängigen Ansprüchen aufgeführten Maßnahmen und Weiterbildungen sind vorteilhafte Verbesserungen des im unabhängigen Patentanspruch 1 angegebenen Schiebers möglich.

In einer Ausgestaltung des erfindungsgemäßen Schiebers weist das Stanzbiegeteil jeweils in dem Übergang zwischen dem Bodenabschnitt und einem der Seitenabschnitte zwei einander gegenüberliegende und entlang einer ersten Biegelinie des Stanzbiegeteils verlaufende Ausstanzungen auf. In vorteilhafter Weise ergibt sich hierdurch ein leichteres Biegen des Stanzteiles. Insbesondere wird die Entstehung eines störenden Biegewulstes verhindert. In einer weiteren Ausgestaltung des erfindungsgemäßen Schiebers sind in vorteilhafter Weise die Seitenabschnitte jeweils zweifach abgewinkelt, wobei jede Abwinklung bevorzugt im Wesentlichen 90° aufweist.

In vorteilhafter Weise weist mindestens ein Seitenabschnitt in einem an die zweite Abwinklung anschließenden Bereich eine Wölbung auf. Im Betrieb des Schiebers übernehmen diese Bereiche der Seitenabschnitte die Abstützung gegen über dem Schieber liegende Bauteile. Die leichte Wölbung der Bereiche ermöglicht einen verbesserten Dämpferfluidfilm zwischen der Schieberfläche und den darüber liegenden Bauteilen, so dass ein sicheres und reibungsärmeres Verschieben des Schiebers möglich ist.

In einer Ausgestaltung des erfindungsgemäßen Schiebers sind die zwischen zwei Abwinklungen der Seitenabschnitte liegenden Bereiche als im Wesentlichen senkrecht zum Bodenabschnitt verlaufende Seitenstege ausgebildet. In vorteilhafter Weise übernehmen diese Stege die seitliche Führung für die lineare Bewegung des Schiebers, so dass der Schieber sicher und ohne Verkippen verschiebbar ist.

In einer weiteren Ausgestaltung des erfindungsgemäßen Schiebers weist ein Seitenabschnitt an seinem freien Ende eine Verzahnung auf. In vorteilhafter Weise ist hierdurch ein Getriebeelement der Verstelleinrichtung auf einfache Weise in den Schieber integriert, so dass auf ein zusätzliches Bauteil verzichtet werden kann. Ein wesentlicher Vorteil besteht somit in der einfachen Herstellung und im geringen Platzbedarf des Getriebeelementes und der dadurch erreichten Kostenersparnis.

Im erfindungsgemäßen Schieber weist der flächige Bodenabschnitt einen planen Mittelbereich und zwei in Richtung einer Hochachse aufgebogene Seitenbereiche auf. Der plane Mittelbereich und die aufgebogenen Seitenbereiche des flächigen Bodenabschnitts bilden die Anlagefläche für die darunter liegende Federpaketeinheit. In vorteilhafter Weise ergibt sich durch die aufgebogenen Seitenbereiche ein leichteres und reibungsärmeres Verschieben des Schiebers über die Federpaketeinheit.

Besonders vorteilhaft ist, dass der Schieber als Verschiebeelement ausgebildet ist, das in einer Ausnehmung des Antriebsgehäuses verschiebbar ist. In vorteilhafter Weise ergibt sich hierdurch eine prozesssichere Zwangsführung der Schiebereinheit, wodurch sich eine sichere Regelung der Dämpferfluidströmung in mindestens einem Durchflusskanal ergibt.

Ein Ausführungsbeispiel der Erfindung ist in den Zeichnungen dargestellt und wird in der nachfolgenden Beschreibung näher erläutert.

### Kurze Beschreibung der Zeichnungen

Figur 1 zeigt eine schematische perspektivische Darstellung eines Ausführungsbeispiels eines erfindungsgemäßen Dämpfers mit einem Dämpferzylinder und einer eine Kolbenstange und einen Kolbenstempel umfassenden Kolbeneinheit.
Figur 2 zeigt eine Draufsicht auf ein Ausführungsbeispiel des Kolbenstempels mit einem Stempelrohr und einem in dem Stempelrohr angeordneten Antriebsgehäuse.
Figur 3 zeigt eine perspektivische Darstellung des Antriebsgehäuses mit einer Durchflusseinrichtung und einer Verstelleinrichtung mit Verstellmitteln, die eine Federpaketeinheit, einen Schieber und eine Getriebeeinheit aufweist.
Figur 4 zeigt eine perspektivische Darstellung des erfindungsgemäßen Schiebers, der als Stanzbiegeteil ausgeführt ist.
Figur 5 zeigt eine Abwicklung des Stanzbiegeteils in einer Ansicht von unten.
Figur 6 zeigt eine Ansicht von vorne auf das Stanzbiegeteil.
Figur 7 zeigt einen Schnitt C-C durch das Stanzbiegeteil gemäß Fig. 6.

### Ausführungsformen der Erfindung

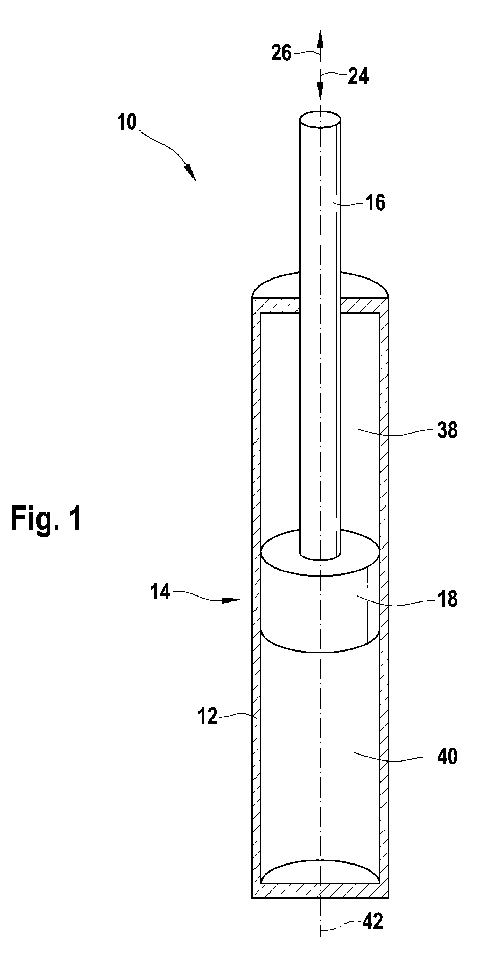

Wie aus Fig. 1 ersichtlich ist, umfasst ein erfindungsgemäßer Dämpfer 10, der vorzugsweise als Stoßdämpfer eines Fahrzeugs ausgeführt ist, einen mit einem Dämpferfluid befüllten Dämpferzylinder 12, in dem eine Kolbeneinheit 14 beweglich angeordnet ist, die eine Kolbenstange 16 und einen Kolbenstempel 18 umfasst, wobei der Kolbenstempel 18 über die Kolbenstange 16 in dem Dämpferzylinder 12 geführt wird. Der Kolbenstempel 18 teilt den Dämpferzylinder 12 in eine obere Dämpferkammer 38 und in eine untere Dämpferkammer 40. Bei einer axialen, vorzugsweise in Richtung einer Hochachse 42 des Dämpfers 10 verlaufenden Bewegung der Kolbenstange 16 und damit des Kolbenstempels 18 gegenüber dem Dämpferzylinder 12 muss das Dämpferfluid durch eine innerhalb des Dämpferzylinders 12 angeordnete Durchflusseinrichtung 20 fließen, die vorzugsweise zwei Durchflusskanäle 20a, 20b aufweist.

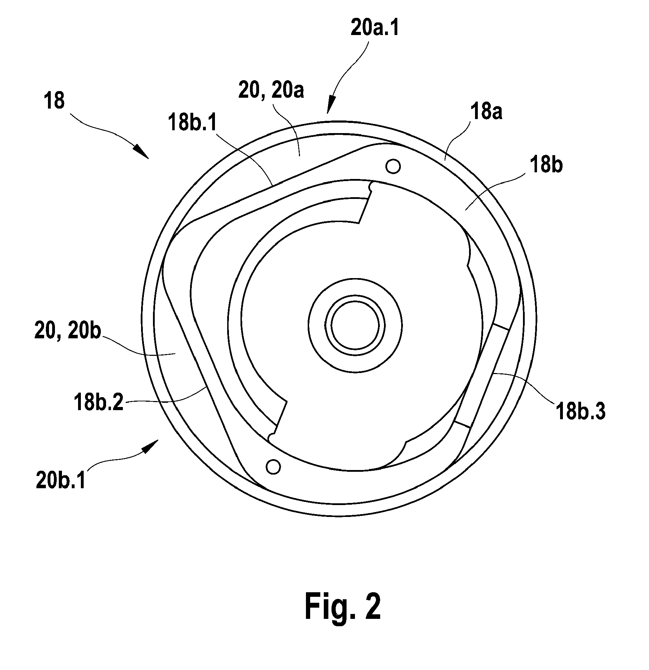

Wie aus Fig. 2 ersichtlich, ist der Kolbenstempel 18 als kompakte Einheit ausgeführt. Der Kolbenstempel 18 umfasst ein Stempelrohr 18a, das beispielsweise als dünnwandiges Stahlrohr ausgeführt ist, und ein innerhalb des Stempelrohres 18a angeordnetes Antriebsgehäuse 18b, welches eine hier nicht dargestellte Antriebseinheit aufnimmt. Die Geometrien des Stempelrohres 18a und des Antriebsgehäuses 18b bilden gemeinsam die beiden Durchflusskanäle 20a und 20b der Durchflusseinrichtung 20. Hierzu ist das Antriebsgehäuse 18b im Wesentlichen zylinderförmig ausgebildet und weist an seinem Umfang vorzugsweise drei Abplattungen 18b.1, 18b.2, 18b.3 auf, die drei ebene Flächen bilden. Wie insbesondere aus Fig. 2 ersichtlich ist, bilden zwei Abplattungen 18b.1, 18b.2 des Antriebsgehäuses 18b im vorliegenden Ausführungsbeispiel zusammen mit dem Stempelrohr 18a die aus freien Querschnitten 20a.1, 20b.1 gebildeten Durchflusskanäle 20a, 20b der Durchflusseinrichtung 20 zum Durchfluss des Dämpferfluids, d.h. die Durchflusskanäle 20a, 20b sind im Wesentlichen zwischen den Abplattungen 18b.1, 18b.2 des Antriebsgehäuses 18b und der Innenwand des Stempelrohres 18a angeordnet. Die dritte Abplattung 18b.3 bildet mit der Innenwand des Stempelrohres 18a im dargestellten Ausführungsbeispiel einen Versorgungskanal, der beispielsweise zur elektrischen Kontaktierung der nicht dargestellten Antriebseinheit verwendet werden kann, wobei die Antriebseinheit beispielsweise als Drehmagnetantrieb ausgeführt sein kann.

Die Durchflusseinrichtung 20 umfasst mindestens eine in eine erste Durchflussrichtung 24 wirkende Zugstufe und/oder mindestens eine in eine zweite Durchflussrichtung 26 wirkende Druckstufe. Im vorliegenden Ausführungsbeispiel wirkt die Zugstufe im Durchflusskanal 20a und die Druckstufe im Durchflusskanal 20b.

Die Durchflussrichtung 24, 26 der beiden Durchflusskanäle 20a, 20b ist entgegengesetzt, wobei sich die jeweilige Richtung innerhalb eines Kanals 20a, 20b nicht ändert. Vorzugsweise bildet die Durchflusseinrichtung 20 einen geschlossenen Kreislauf.

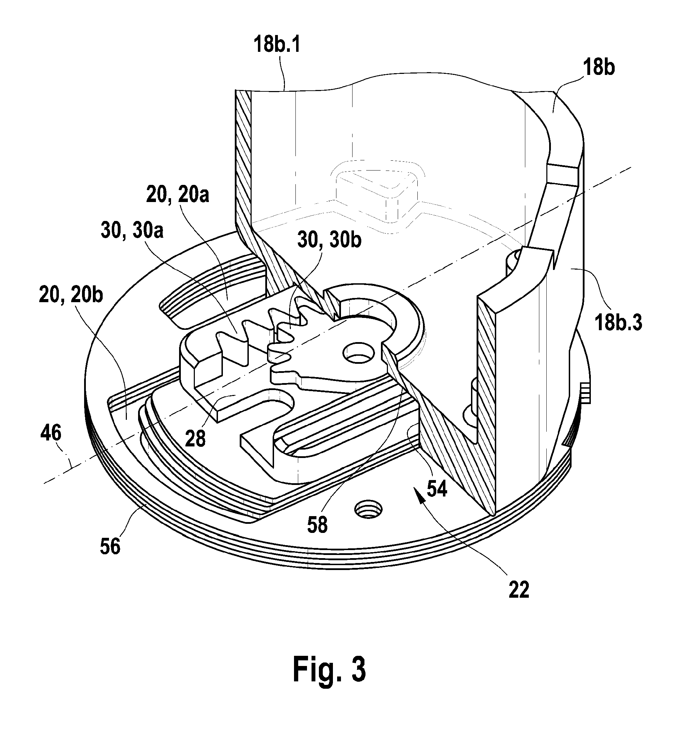

Wie aus der Fig. 3 ersichtlich, ist innerhalb des Dämpferzylinders 12 eine Verstelleinrichtung 22 zur Regelung des Dämpferfluidstroms in der Durchflusseinrichtung 20 mit Verstellmitteln 28, 30, 56 angeordnet, welche eine Federpaketeinheit 56, einen über der Federpaketeinheit 56 angeordneten, verschiebbaren Schieber 28 und eine Getriebeeinheit 30 umfassen. Der Schieber 28 schließt sich an das Antriebsgehäuse 18b, bevorzugt an einen geodätisch untenliegenden Bodenbereich des Antriebsgehäuse 18b an. Im vorliegenden Ausführungsbeispiel grenzt der Schieber 28 unmittelbar an das Antriebsgehäuse 18b bzw. an den Boden 58 des Antriebsgehäuses 18b an. Im vorliegenden Ausführungsbeispiel ist der Schieber 28 als Verschiebeelement ausgebildet, das in einer im Boden 58 des Antriebsgehäuses 18b ausgebildeten Ausnehmung 54 des Antriebsgehäuses 18b entlang einer Längsachse 46 auf der Federpaketeinheit 56 verschiebbar ist.

Im vorliegenden Ausführungsbeispiel weist die Getriebeeinheit 30 ein mit dem Schieber 28 in Wirkverbindung stehendes Zahnstangensegment 30a auf, in das ein Zahnradsegment 30b eingreift, welches zur Positionsveränderung des Schiebers 28 von der korrespondierenden, hier nicht dargestellten Antriebseinheit bewegt wird. Im vorliegenden Ausführungsbeispiel wandelt daher die Getriebeeinheit 30, 30a und 30b eine Rotationsbewegung der Antriebseinheit in eine Translationsbewegung des Schiebers 28 in Richtung der Längsachse 46 um, indem die Antriebseinheit das Zahnradsegment 30b mit einer Rotationsbewegung beaufschlagt, welches in das Zahnstangensegment 30a eingreift und dieses in eine Translationsbewegung versetzt. D.h. zum Verschieben des Schiebers 28 weist die Getriebeeinheit 30 das Zahnstangensegment 30a auf, in welches das Zahnradsegment 30b eingreift, das zur Positionsveränderung des Schiebers 28 von der korrespondierenden Antriebseinheit gedreht wird. Im vorliegenden Ausführungsbeispiel ist das Zahnstangensegment 30a vorzugsweise einstückig mit dem Schieber 28 ausgeführt. Zur Einstellung des Dämpferfluidstroms in der Durchflusseinrichtung 20 wird die Verstelleinrichtung 22 aktiviert, indem der Schieber 28 der Verstelleinrichtung 22 verschoben wird.

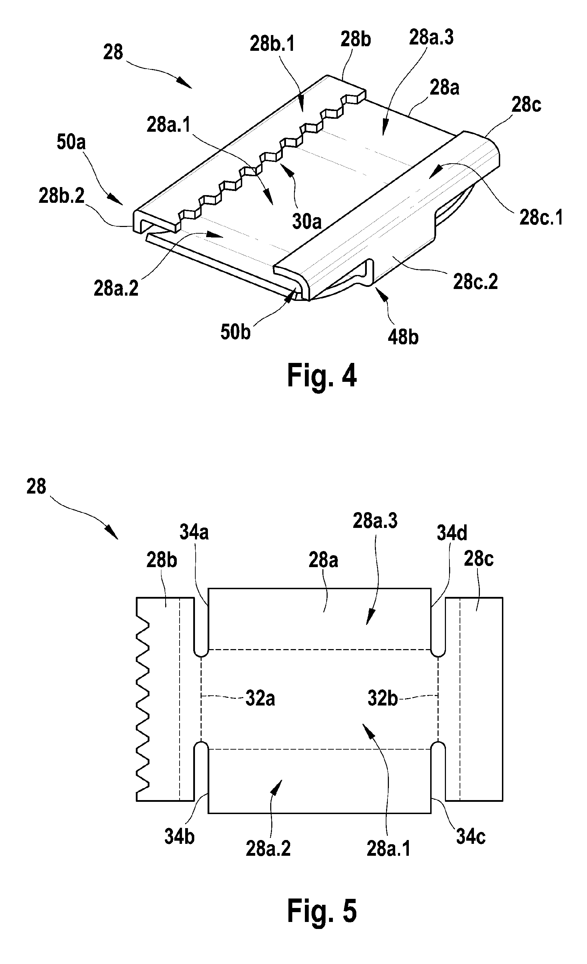

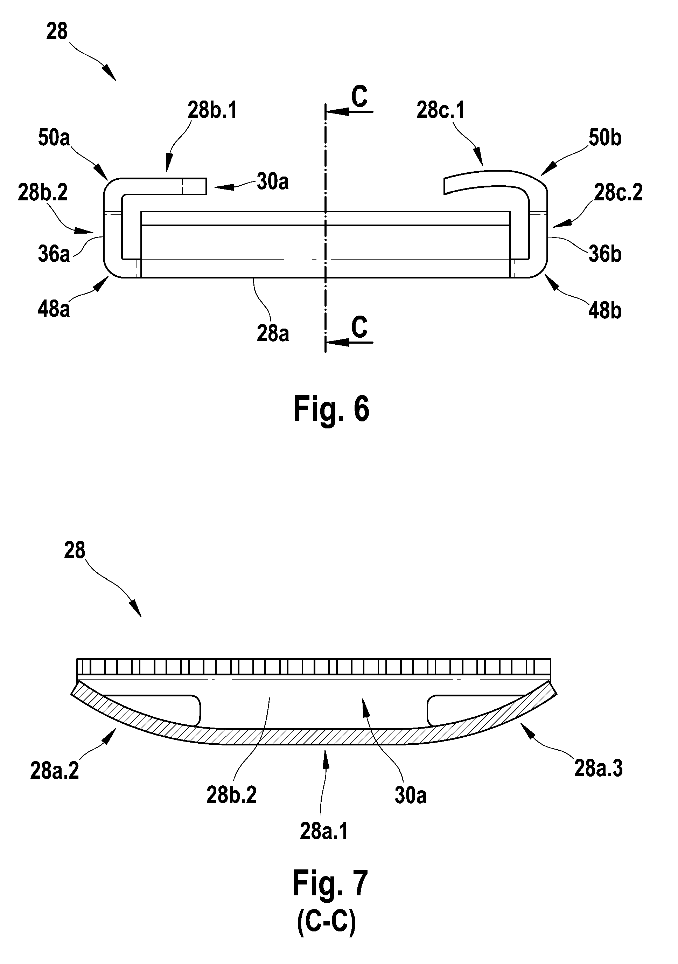

Um eine einfache und kostengünstige Herstellung des Schiebers zu ermöglichen, ist gemäß Fig. 4 bis 7 der Schieber als Stanzbiegeteil 28 ausgeführt. Vorzugsweise ist der Schieber als mehrfach abgewinkelter Blechabschnitt ausgebildet. Im vorliegenden Ausführungsbeispiel weist das Stanzbiegeteil 28 einen flächigen Bodenabschnitt 28a und zwei sich jeweils an den Bodenabschnitt 28a anschließende abgewinkelte Seitenabschnitte 28b, 28c auf, welche sich bevorzugt gegenüberliegen.

Um das Biegen zu erleichtern, weist das Stanzbiegeteil 28 jeweils in dem Übergang zwischen dem Bodenabschnitt 28a und einem der Seitenabschnitte 28b, 28c zwei einander gegenüberliegende und entlang einer ersten Biegelinie 32a, 32b des Stanzbiegeteils 28 verlaufende Ausstanzungen 34a, 34b, 34c, 34d auf. Die Seitenabschnitte 28b, 28c sind bevorzugt jeweils zweifach abgewinkelt, wobei jede Abwinklung 48a, 48b, 50a, 50b im Wesentlichen 90° aufweist.

Um die Bildung eines Dämpferfluidfilmes zwischen Schieber 28 und dem über dem Schieber 28 liegenden beziehungsweise angeordneten Antriebsgehäuses 18b zu ermöglichen, weist mindestens ein Seitenabschnitt 28b, 28c in einem an die zweite Abwinklung 50a, 50b anschließenden Bereich 28b.1, 28c.1 eine Wölbung auf. Vorzugsweise handelt es sich dabei um eine konvexe Wölbung, d.h. der Bereich 28b.1, 28c.1 ist nach außen beziehungsweise von dem Bodenabschnitt 28a weg gewölbt.

Um eine sichere seitliche Führung des Schiebers 28 zu erreichen, sind die zwischen zwei Abwinklungen 48a, 50a; 48b, 50b der Seitenabschnitte 28b, 28c liegenden Bereiche 28b.2, 28c.2 als im Wesentlichen senkrecht zum Bodenabschnitt 28a verlaufende Seitenstege 36a, 36b ausgebildet.

Im vorliegenden Ausführungsbeispiel weist ein Seitenabschnitt 28b an seinem freien Ende eine Verzahnung 30a auf, welche als Zahnstangensegment der Getriebeeinheit 30 ausgebildet ist beziehungsweise die Funktion eines Zahnstangensegments der Getriebeeinheit 30 ausübt. D.h. zum Verschieben des Schiebers 28 weist der Schieber 28 die als Zahnstangensegment dienende beziehungsweise ausgebildete Verzahnung 30a auf, in welches das Zahnradsegment 30b der Getriebeeinheit 30 eingreift, das zur Positionsveränderung des Schiebers 28 von der korrespondierenden Antriebseinheit gedreht wird. Somit ist im vorliegenden Ausführungsbeispiel das als Verzahnung ausgeführte Zahnstangensegment vorzugsweise einstückig mit dem Schieber 28 ausgeführt.

Um ein leichteres und reibungsärmeres Verschieben des Schiebers 28 über die Federpaketeinheit 56 zu ermöglichen, weist der flächige Bodenabschnitt 28a einen planen Mittelbereich 28a.1 und zwei in Richtung einer Hochachse 42 aufgebogene Seitenbereiche 28a.2, 28a.3 auf, wobei die Biegelinien 44a, 44b der Seitenbereiche 28a.2, 28a.3 des flächigen Bodenabschnitts 28a senkrecht zu den Biegelinien 32a, 32b der Seitenabschnitte 28b, 28c des Stanzbiegeteiles 28 verlaufen.

Ein erfindungsgemäßer Dämpfer für ein Fahrzeug umfasst zur Regelung einer Dämpferfluidströmung in mindestens einem Durchflusskanal mindestens einen erfindungsgemäßen Schieber, um Dämpferkennwerte des Fahrzeugdämpfers einzustellen.

## Patentansprüche

1. Schieber (28) für einen Fahrzeugdämpfer, wobei mit dem Schieber (28) zur Einstellung von Dämpferkennwerten ein Durchfluss eines Dämpferfluids durch mindestens einen Durchflusskanal (20a, 20b) regelbar ist, **dadurch gekennzeichnet, dass** der Schieber als Stanzbiegeteil (28) ausgeführt ist.

2. Schieber nach Anspruch 1, **dadurch gekennzeichnet, dass** das Stanzbiegeteil (28) einen flächigen Bodenabschnitt (28a) und zwei sich jeweils an den Bodenabschnitt (28a) anschließende abgewinkelte Seitenabschnitte (28b, 28c) aufweist.

3. Schieber nach Anspruch 2, **dadurch gekennzeichnet, dass** das Stanzbiegeteil (28) jeweils in dem Übergang zwischen dem Bodenabschnitt (28a) und einem der Seitenabschnitte (28b, 28c) zwei einander gegenüberliegende und entlang einer ersten Biegelinie (32a, 32b) des Stanzbiegeteils (28) verlaufende Ausstanzungen (34a, 34b, 34c, 34d) aufweist.

4. Schieber nach Anspruch 2 oder 3, **dadurch gekennzeichnet, dass** die Seitenabschnitte (28b, 28c) jeweils zweifach abgewinkelt sind, wobei jede Abwinklung (48a, 48b, 50a, 50b) im Wesentlichen 90° aufweist.

5. Schieber nach einem der Ansprüche 2 bis 4, **dadurch gekennzeichnet, dass** mindestens ein Seitenabschnitt (28b, 28c) in einem an die zweite Abwinklung (50a, 50b) anschließenden Bereich (28b.1, 28c.1) eine Wölbung aufweist.

6. Schieber nach einem der Ansprüche 2 bis 5, **dadurch gekennzeichnet, dass** die zwischen zwei Abwinklungen (48a, 50a; 48b, 50b) der Seitenabschnitte (28b, 28c) liegenden Bereiche (28b.2, 28c.2) als im Wesentlichen senkrecht zum Bodenabschnitt (28a) verlaufende Seitenstege (36a, 36b) ausgebildet sind.

7. Schieber nach einem der Ansprüche 2 bis 6, **dadurch gekennzeichnet, dass** ein Seitenabschnitt (28b) an seinem freien Ende eine Verzahnung (30a) aufweist.

8. Schieber nach einem der Ansprüche 2 bis 7, **dadurch gekennzeichnet, dass** der flächige Bodenabschnitt (28a) einen planen Mittelbereich (28a.1) und zwei in Richtung einer Hochachse (42) aufgebogene Seitenbereiche (28a.2, 28a.3) aufweist.

9. Dämpfer (10) für ein Fahrzeug, wobei zur Einstellung von Dämpferkennwerten ein Fluss eines Dämpferfluids durch mindestens einen Durchflusskanal (20a, 20b) mit Verstellmitteln (28, 30, 56) regelbar ist, **dadurch gekennzeichnet, dass** die Verstellmittel mindestens einen Schieber (28) nach einem der Ansprüche 1 bis 8 umfassen.

10. Dämpfer nach Anspruch 9, **dadurch gekennzeichnet, dass** der Schieber (28) als Verschiebeelement ausgebildet ist, das in einer Ausnehmung (54) eines Antriebsgehäuses (18b) des Dämpfers (10) verschiebbar ist.
